# FASCICULE DE BREVET EUROPEEN

(11) **EP 2 544 979 B1**
(45) Date de publication et mention de la délivrance du brevet: **21.05.2014**
(21) Numéro de dépôt: 11710443.0
(22) Date de dépôt: 04.03.2011
(51) Int. Cl.: B65G 69/00

(54) **DISPOSITIF DE CALAGE A QUAI D'UN VEHICULE DE TRANSPORT DE MARCHANDISES, INSTALLATION ET PROCÉDÉ**
VORRICHTUNG ZUR FESTKEILUNG EINES FRACHTTRANSPORTFAHRZEUGES ENTLANG EINES DOCKS, INSTALLATION UND VERFAHREN
DEVICE FOR CHOCKING A FREIGHT TRANSPORT VEHICLE ALONG A DOCK, INSTALLATION AND METHOD

(30) Priorité: 17.11.2010 FR 1004465; 06.03.2010 FR 1000914
(43) Date de publication de la demande: 16.01.2013
(73) Titulaire: A.S.A. Fermetures, 64230 Lescar (FR)
(72) Inventeur: BELLOTA, Ignace, F-64110 Laroin (FR)
(74) Mandataire: Cornuejols, Georges
(86) Numéro de dépôt international: PCT/EP2011/053328
(87) Numéro de publication internationale: WO 2011/110507

(56) Documents cités:
- EP-A1- 0 537 075
- EP-A1- 1 095 880
- EP-A1- 1 764 275
- WO-A1-95/18029
- WO-A1-97/49627
- WO-A2-01/43526
- DE-C1- 4 427 406
- FR-A1- 2 909 364
- US-A- 4 207 019
- US-A- 6 082 952
- US-A1- 2009 194 375

## Description

### Domaine technique

La présente invention est du domaine des matériels utilisés pour immobiliser fermement un véhicule de transport contre un quai de transfèrement de marchandises et se rapporte plus particulièrement à un dispositif de cales aptes à venir contre l'un des trains de roues arrière du véhicule pour en interdire tout mouvement le temps du chargement et déchargement de ce dernier.

### Etat de la technique antérieure

On connaît de l'état de la technique des dispositifs de calage à quai des véhicules de transport. De tels dispositifs sont notamment connus des demandes de brevet EP 537 075, EP 1 095 880, FR 2 652 340, US 4 207 019, DE 44 01 653 WO 95/18029, WO 01/43526, FR 2 909 364, FR 2 935 965. US 6,082,952 décrit le préambule de la revendication 1.

### Exposé de l'invention

Dans la présente description un train de roues est un ensemble de roues montées sur un même essieu. Le dernier train de roues arrière est le train de roues le plus proche de l'arrière du véhicule et le premier train de roues arrière est le train de roues arrière le plus proche de l'avant du véhicule. Le train de roues intermédiaire est le train de roues situé entre le premier et le dernier train de roues arrière.

### Problème technique

Typiquement en vue d'acculer un véhicule de transport des marchandises contre un quai de transbordement et de l'y maintenir le temps du transbordement, il est d'abord procédé, dans une première phase, par recul du véhicule, à une mise en place de l'un au moins des trains de roues de ce dernier dans la zone d'action d'un dispositif de calage comportant des cales de poussée. Une fois la position adéquate atteinte, le conducteur stoppe son véhicule, arrête le moteur et place le frein de stationnement dans une position inactive.
Dans une seconde phase, le dispositif de calage, sous la conduite et le contrôle d'un opérateur, est activé de façon que par action de poussée des cales sur l'un des trains de roues, l'arrière du véhicule soit amené contre le quai de transbordement et y soit fermement maintenu le temps du chargement et déchargement des marchandises.

La première phase de recul du véhicule s'effectue habituellement à l'aveugle, le conducteur étant dans l'impossibilité d'apercevoir des obstacles et des personnes situées sur la trajectoire de l'arrière de son véhicule. Il peut être aidé dans cette manoeuvre par une personne stationnée sur le quai de transbordement, mais à partir d'une distance inférieure à cinq mètres, la personne disparaît du champ de vision des rétroviseurs. Pour être aperçue du conducteur, cette personne doit se placer de nouveau dans le champ de vision ce qui l'oblige à s'exposer physiquement à un risque d'écrasement entre le quai et l'arrière du véhicule. Ainsi le besoin s'est fait sentir, de provoquer l'arrêt du véhicule lorsque la distance entre l'arrière de ce dernier et le quai devient proche d'une valeur préétablie, laquelle, doit être supérieure à cinquante centimètres. Habituellement, pour répondre à l'objectif précité, les installations de quai de chargement sont équipées de moyens aptes à détecter la position de l'arrière du véhicule et agir sur une signalétique lumineuse à l'usage du conducteur. Ainsi le conducteur est invité par un signal lumineux approprié d'avoir à stopper son véhicule. L'inconvénient de cette disposition est que sous certaines conditions d'éclairement diurne, le signal lumineux peut être rendu difficilement perceptible. En outre le conducteur peut se montrer inattentif ou particulièrement imprudent et ne pas tenir compte de la signalisation. Ces dispositions antérieures ne peuvent donc s'affranchir du facteur humain et manquent de fiabilité.

Les dispositifs antérieurs sont conçus aptes à venir contre les roues du premier train de roues arrière et entraîner par poussée sur ces dernières, le véhicule contre le quai de chargement et le maintenir dans cette position. L'intérêt de tels dispositifs réside dans le fait que pour leur fonctionnement aucun moyen de détection de la position du premier train de roues n'est nécessaire, la course de la cale de poussée étant suffisante pour venir agir en poussée contre ce train quelle que soit sa position par rapport au quai. Cependant, ces dispositifs sont principalement prévus pour caler les roues du premier train arrière de roues alors que l'accès à ce premier train peut être rendu difficile par les caissons que comportent certains véhicules immédiatement en avant de ce premier train. En effet il a été observé que la distance entre ces caissons et le sol est trop faible pour autoriser le complet déploiement des cales d'immobilisation de sorte que ces dernières lors de ce mouvement de déploiement viennent heurter la paroi inférieure du caisson et se trouvent bloquées dans leur progression par cette dernière. On assiste donc à une impossibilité de calage du véhicule et à un endommagement du caisson.

L'inventeur a cherché à résoudre cet inconvénient en agissant non plus sur le premier train de roues mais sur le dernier train ou sur le train intermédiaire. Cependant dans cette optique il est nécessaire que le déploiement des cales soit opéré entre deux trains de roues à savoir entre le premier train de roues et le train immédiatement en arrière. Or s'il est facile d'agir avec les systèmes antérieurs sur le premier train sans connaître en préalable sa position il n'en va pas de même lorsque la poussée doit être appliquée sur le dernier train de roues ou le train de roues intermédiaire et que, pour cette raison, le déploiement de la cale doit se produire entre deux trains de roues successifs.

### Solution technique.

La présente invention a pour objectif d'apporter des solutions aux problèmes techniques sus-évoqués en proposant un dispositif apte à former une barrière physique de nature à constituer une butée au recul du véhicule vers le quai lors de la phase préparatoire de recul et de conserver ainsi à l'issue de cette phase préparatoire une distance suffisante de sécurité entre l'arrière du véhicule et le quai de manière à prévenir les risques d'accident par écrasement.

Un autre objectif de la présente invention est de proposer un dispositif apte à agir sur les roues du dernier train de roues du véhicule ou sur les roues du train intermédiaire si ce dernier est présent sur le véhicule.

À cet effet le dispositif selon l'invention, de calage à quai de véhicule de transport de marchandises, se caractérise par les caractéristiques de la revendication 1. L'invention concerne également l'installation selon la revendication 12 et le procédé selon la revendication 13. Le dispositif comprend un support horizontal prévu pour être ancré au sol face à un quai de chargement, une platine horizontale montée en coulissement sur un support horizontal, une cale arrière, prévue pour constituer butée au dernier train de roues arrière du véhicule à caler à quai, ladite cale arrière étant solidaire de ladite platine, une cale avant, mobile, de poussée, portée par la platine horizontale à distance de la cale arrière, ladite platine étant actionnée en coulissement le long du support entre une position antérieure de repos et une position postérieure de calage à quai du véhicule de transport par un ensemble moteur lequel est également apte à immobiliser la platine tant en position antérieure de repos qu'en position de calage à quai et la maintenir dans ces positions, et la cale avant de poussée pouvant occuper une position d'effacement selon laquelle elle est écartée de la trajectoire des roues arrière du véhicule et une position active selon laquelle, d'une part, elle est disposée en regard de l'une des surfaces de révolution de l'une des roues arrière du véhicule et, d'autre part, par déplacement de la platine vers sa position de calage, elle peut venir agir en poussée sur cette surface de révolution.

La cale arrière constitue ainsi un obstacle à la progression du véhicule vers le quai. Ainsi ce véhicule est systématiquement stoppé à distance du quai afin de conserver en avant du quai une distance de sécurité. Le véhicule sera par la suite amené à quai non pas à l'aide de ses propres moyens moteurs, mais à l'aide de l'ensemble moteur du dispositif et ce sous le contrôle et la commande d'un préposé à l'accostage.

Selon une autre caractéristique, le dispositif selon l'invention, prévu pour acculer à quai des véhicules possédant au moins un train de roues arrière est remarquable en ce que la distance entre la cale arrière et la cale avant est adaptée au diamètres des roues du dernier train arrière des véhicules de transport et que cette distance est telle que lorsque le dernier train de roues arrière est en appui contre la ou chaque cale arrière, la ou chaque cale avant, en position de repos, est disposée en regard d'une zone libre située immédiatement en avant de la bande de roulement du pneumatique de l'une au moins des roues du dernier train arrière.

Selon une autre caractéristique, le dispositif selon l'invention, prévu pour acculer à quai des véhicules possédant au moins deux trains de roues arrière est remarquable en ce que la distance entre la cale arrière et la cale avant est adaptée au diamètre des roues des trains arrière des véhicules de transport et que cette distance est telle que lorsque le dernier train de roues arrière est appui contre la ou chaque cale arrière, la ou chaque cale avant, en position de repos est disposée en arrière du premier train de roues arrière et à écartement du dernier train de roues arrière de façon à pouvoir être librement actionnée vers sa position active et ensuite lors du mouvement de la platine vers la position de calage, pouvoir venir agir directement en poussée sur le train de roues immédiatement en arrière, ce train de roues pouvant être le dernier train de roues du véhicule ou le ou l'un des trains intermédiaires.

Les diamètres des roues des véhicules de transport étant généralement compris entre 800 et 1100 mm et l'entraxe entre deux essieux arrière successifs étant compris généralement entre 1300 et 1400 mm, la distance entre la cale arrière et la cale avant en position d'effacement sera de l'ordre de 1300 mm ou 2400 à 2700 mm selon que le dispositif est configuré pour que la ou les cales avant agissent sur le dernier train de roues arrière ou bien sur le train de roues intermédiaire.

La cale arrière constitue ainsi tant un obstacle à la progression du camion vers le quai qu'un repère de la position du dernier train de roues arrière. La valeur de la distance entre cette cale arrière et la cale avant étant choisie en fonction des différents diamètres des roues des véhicules, la cale avant pourra être déployée systématiquement entre deux trains de roues pour pouvoir agir ultérieurement en poussée sur le train situé immédiatement en arrière.

Selon une première disposition de l'invention la ou chaque cale avant agit sur la bande de roulement du pneumatique de la roue correspondante du véhicule, mais selon une autre caractéristique, le dispositif selon l'invention, prévu pour acculer à quai des véhicules possédant au moins un train de roues arrière, est remarquable notamment en ce que la distance entre la cale arrière et la cale avant est adaptée au diamètres des roues du dernier train arrière et que cette distance est telle que lorsque le dernier train de roues arrière est en appui contre la ou chaque cale arrière, la ou chaque cale avant, en position de repos, est disposée en regard de la jante de l'une des roues et en position active est disposée dans le volume de ladite jante pour agir en poussée sur la surface cylindrique concave de cette dernière lors du mouvement de la platine de sa position antérieure vers sa position de calage. Selon cette disposition, l'écartement entre les cales avant et arrière sera compris entre 20 et 40 cm.

On comprend donc que les dispositions précédemment décrites résolvent tant les problèmes d'écrasement des personnes contre le quai que les problèmes d'endommagement des caissons que comportent les véhicules en avant du premier train de roues arrière.

Selon une autre disposition de l'invention, chaque cale arrière et chaque cale avant au moins en position active, sont disposées latéralement à la platine.
En raison de cette disposition, le support, la platine et l'ensemble moteur sont écartés latéralement de la trajectoire des roues du véhicule de transport et ne peuvent être endommagés notamment par le poids de ce dernier.

Selon une autre disposition de l'invention, chaque cale avant est entraînée entre la position d'effacement et la position active et inversement par un organe moteur.

Selon une modalité pratique de réalisation d'une première forme de réalisation du dispositif, chaque cale avant et arrière est portée par un bras horizontal solidaire de la platine et s'étendant de manière latérale par rapport à cette dernière. En raison de cette disposition, le support, la platine et l'ensemble moteur se trouvent à distance des cales avant et arrière et sont déportés latéralement par rapport à ces dernières et par rapport à la trajectoire des roues des véhicules.

Avantageusement, selon une autre disposition du premier mode de réalisation, le dispositif selon l'invention, comporte deux cales arrière et deux cales avant portées chacune par un bras latéral, la platine, le support et l'ensemble moteur occupant une position centrale par rapport aux cales arrière et avant. Cette disposition permet un équilibrage des efforts exercés par les roues du véhicule sur le dispositif et sur l'ensemble moteur que comporte ce dernier.

Selon une autre caractéristique de l'invention relative au premier mode de réalisation du dispositif, les bras latéraux associés aux cales avant sont liés l'un à l'autre. Une telle disposition conduit à simplification du dispositif et assure la parfaite synchronisation des mouvements des cales avant notamment entre la position d'effacement et la position active.

Selon une autre disposition du premier mode de réalisation de l'invention, la ou chaque cale avant est montée articulée par rapport à la platine selon un axe géométrique horizontal (AA') perpendiculaire à la direction de déplacement de ladite platine le long du support. Cette disposition vise encore à simplifier la réalisation du dispositif de calage.

Selon une forme pratique de réalisation du premier mode de réalisation de l'invention, la pièce d'un seul tenant formant les deux bras des cales avant est dotée d'une chape centrale engagée en articulation sur un arbre monté par ses extrémités sur deux ailes verticales latérales de la platine.

En outre selon une autre disposition du premier mode de réalisation de l'invention, la position d'effacement et la position active de chaque cale avant sont matérialisées par des butées.

Selon une autre disposition du premier mode de réalisation de l'invention, la ou chaque cale avant est actionnée entre sa position d'effacement et sa position active par l'ensemble moteur d'actionnement de la platine et ledit ensemble moteur est lié cinématiquement aux bras des cales avant par une transmission de mouvement apte à imprimer à ces cales, un mouvement de basculement selon l'axe AA' entre sa position d'effacement et sa positon active et inversement.
Une telle disposition conduit à une simplification du dispositif selon l'invention.

Selon une autre caractéristique du premier mode de réalisation de l'invention, la transmission de mouvement sus évoquée, comprend :
- un coulisseau guidé en translation sur la platine mobile, ce coulisseau étant solidaire de l'ensemble moteur,
- au moins une crémaillère installée fixement sur le coulisseau et s'étendant selon une direction parallèle à la direction de déplacement de la platine sur le support et,
- au moins un pignon denté en relation d'engrènement avec la crémaillère, ledit pignon étant rigidement fixé à l'une des ailes de la chape centrale et ce de manière centrée par rapport à l'axe de pivotement AA'.

L'intérêt d'une telle disposition réside dans le fait que l'ensemble moteur et la transmission ne se déplacent pas en hauteur lors du pivotement des cales avant et demeurent au ras du sol à écartement des organes que peut posséder le véhicule, latéralement aux roues, tels qu'éléments de suspension sur-abaissés et autres organes qui s'opposent pour certains systèmes antérieurs dont les transmissions et organes suivent le mouvement des cales, au déploiement de ces dernières en formant obstacles à leur mouvement.

### Description sommaire des figures et des dessins

D'autres avantages et caractéristiques de l'invention apparaîtront à la lecture de la description d'une forme préférée de réalisation donnée à titre d'exemple non limitatif en se référant aux dessins annexés en lesquels :
- la figure 1 est une vue en perspective d'un dispositif selon l'invention, en position de repos,
- la figure 2 montre en perspective un dispositif selon l'invention, en position de repos, sans les éléments de protection, les roues du véhicule apparaissant sur cette figure en traits mixtes fin,
- la figure 3 est une vue en coupe longitudinale du dispositif les cales avant étant en position d'effacement,
- la figure 4 est une vue en coupe longitudinale du dispositif, les cales avant étant en position active,
- les figures 5 à 9 illustrent le mode de fonctionnement du dispositif selon l'invention,
- la figures 10 montre en perspective un dispositif selon une deuxième forme de réalisation, la cale avant étant en position inactive,
- la figure 11 montre en perspective le dispositif selon la deuxième forme de réalisation, la cale avant étant en position active,
- la figure 12 montre en perspective un dispositif selon une troisième forme de réalisation, la cale avant étant en position inactive
- la figure 13 montre en perspective le dispositif selon la troisième forme de réalisation, la cale avant étant en position active,
- la figure 14 montre en perspective une quatrième forme de réalisation du dispositif selon l'invention,
- la figure 15 montre en perspective une cinquième forme de réalisation du dispositif conforme à l'invention, les capots de protection n'étant pas représentés,
- la figure 16 est une vue de profil du dispositif selon la figure 15.

### Meilleure manière de réaliser l'invention

Tel que représenté, le dispositif selon l'invention pour le calage à quai d'un véhicule de transport de marchandises, comprend un support 1 prévu pour être fixé sur le sol, une platine mobile 2 montée en coulissement sur le support 1 et ce entre une position antérieure de repos et une position postérieure de calage et inversement, au moins une cale arrière 3 portée fixement par la platine 2, au moins une cale avant 4 portée par la platine 2, cette cale avant 4 étant mobile entre une position d'effacement et une position active selon laquelle par mouvement de la platine notamment vers sa position de calage elle peut vernir agir sur l'une au moins des roues arrière du véhicule. Ces deux positions extrêmes de la cale avant 4 peuvent être matérialisées par des butées. La mobilité de la cale entre la position d'effacement et la position active est assurée de préférence à la commande, sous l'effet de l'action d'un organe moteur.

Le dispositif selon l'invention comprend de plus un ensemble moteur 5 solidaire du support 1, apte à déplacer la platine 2 entre la position antérieure de repos et la position postérieure de calage et inversement et à maintenir fermement, lorsque requis, ladite platine 2 soit en position de repos soit en position de calage afin que dans ces positions, l'action des roues du véhicule sur la ou les cales 3, 4 portées par cette platine soit inopérante et ne puisse déplacer la platine le long du support.

De cette manière, le véhicule lors du mouvement de recul vers le quai sera arrêté dans sa progression par la cale arrière et ne pourra plus poursuivre sa course, la platine 2, dans ce cas, étant disposée et maintenue en position antérieure de repos,. Ainsi pourra être conservé entre l'arrière du véhicule une distance suffisante de sécurité au minimum égale à cinquante centimètre entre la partie la plus en arrière du véhicule et le quai. La position du dispositif par rapport au quai prendra en compte le fait quelque fois les conducteurs des véhicules, avant tout mouvement de recul vers le quai, abaissent le hayon arrière en position horizontale au détriment de toutes règles de sécurité. L'immobilisation de la platine 2 en position antérieure et donc de la cale arrière 3 réduit ainsi les risques d'accidents mortels.

Après immobilisation du véhicule à distance du quai et arrêt du moteur du véhicule, l'ensemble moteur 5 sera activé pour amener le véhicule à quai, mais ce mouvement de recul s'effectuera sous le contrôle et la commande d'un préposé à cette tâche et non sous la commande du conducteur du véhicule. Ainsi le préposé pourra surveiller en permanence, lors de ce mouvement de recul, notamment la zone comprise entre le quai et le véhicule et stopper la progression du véhicule vers le quai en cas de danger.

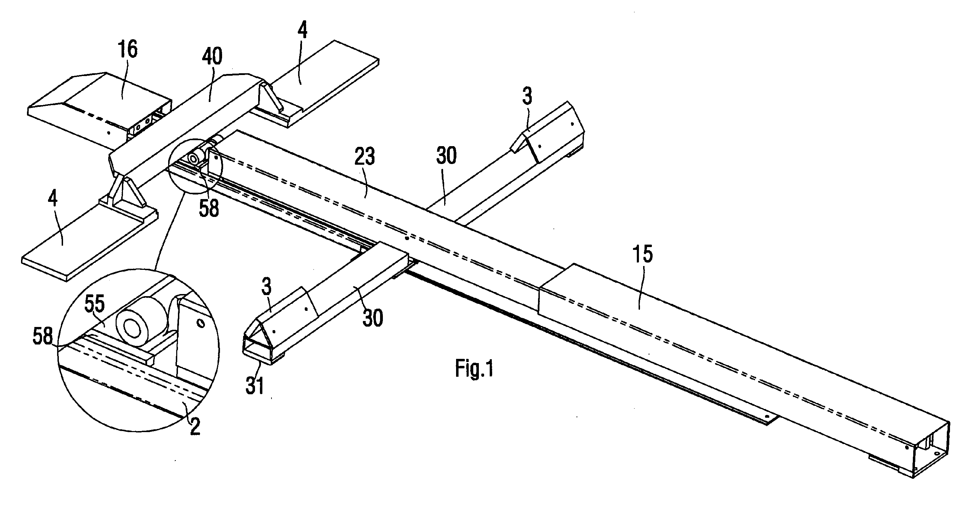

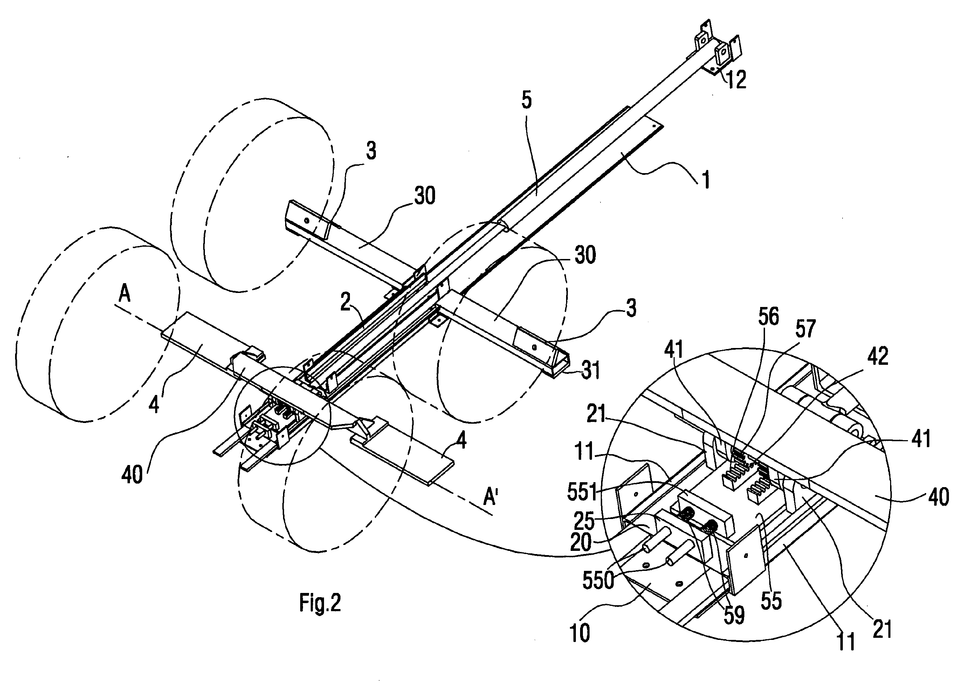

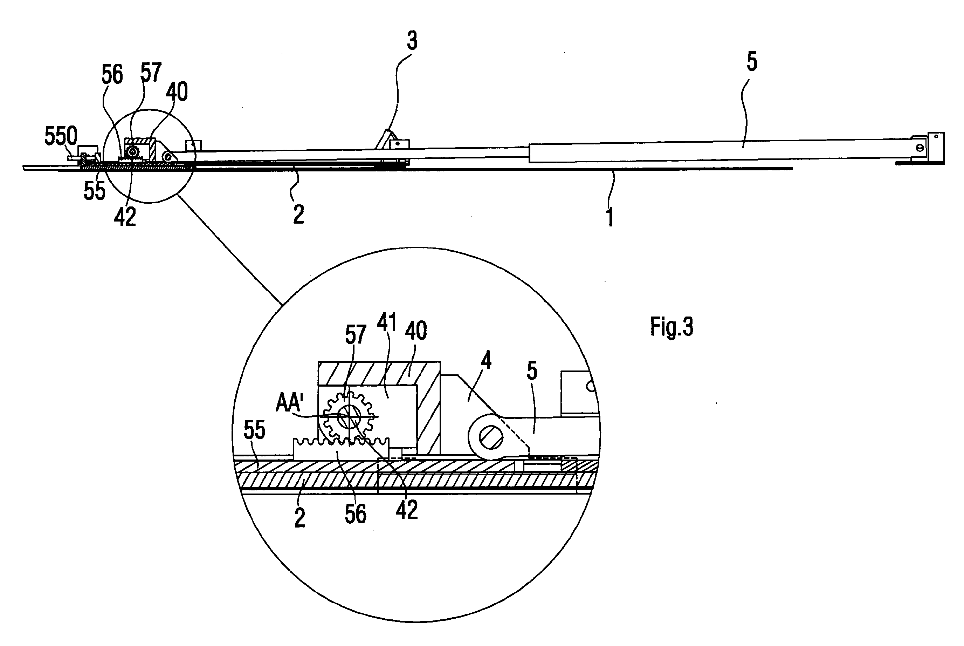

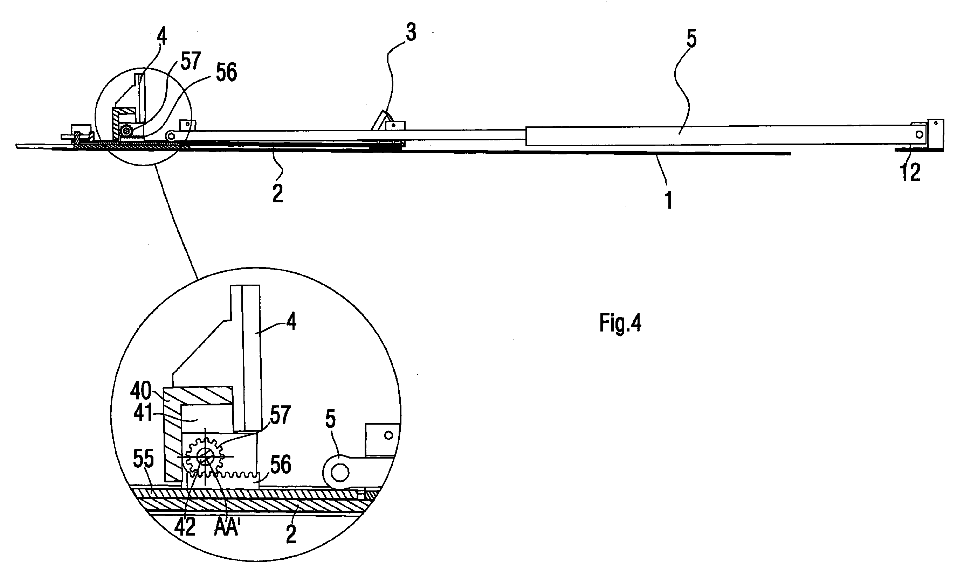

En figure 1 à 9 est montré un dispositif selon une première forme de réalisation.

Comme on peut le voir, la ou chaque cale avant 4 est portée de manière articulée par la platine 2 et cette cale avant 4 est mobile entre une position d'effacement selon laquelle elle est horizontale et en appui sur le sol et une position active selon laquelle elle est redressée par rapport à l'horizontale et occupe sensiblement une position verticale.

Les cales 3 et 4 dont la largeur correspond à celle des roues du véhicule, sont portées chacune en extrémité d'un bras 30, 40 solidaire de la platine 2 et s'étendant latéralement par rapport à cette dernière. Avantageusement, le bras 30, est équipé d'un patin 31 de glissement sur le sol. Dans la forme préférée de réalisation, le dispositif est équipé de deux cales arrière 3 droite et gauche et de deux cales avant 4 droite et gauche portées toujours chacune par un bras latéral 30, 40. De par cette disposition, le dispositif agit simultanément sur les roues droite et gauche du dernier train de roues ou du train intermédiaire du véhicule de transport.

Le support 1 comprend une semelle horizontale 10 substantiellement rectangulaire, d'appui et d'ancrage au sol flanquée, dans sa partie antérieure, de deux rebords latéraux opposés 11, formant rail de guidage de la platine 2, cette dernière prenant appui glissant sur la semelle 10 entre les rebords latéraux 11.

À distance de la semelle 10, et en arrière de cette dernière, le support 1 comprend une sole 12 d'ancrage au sol à laquelle est solidarisé l'ensemble moteur 5. Cette sole d'ancrage 12 comprend deux pattes latérales en saillie vers le haut auxquelles est fixé un élément de recouvrement et de protection 15 de l'ensemble moteur 5. Cet élément longiforme, de recouvrement et de protection présente une section droite sous forme de U tourné vers le bas. En partie antérieure, le support 1 reçoit un second élément de recouvrement et de protection 16 épousant tout comme le premier, une section droite en U tourné vers le bas.

La platine 2 est constituée essentiellement par un profilé de section droite en U comportant en partie antérieure un guide 20 sous forme de plaque rectangulaire. Ce guide est engagé par ses bordures latérales dans les deux rails de guidage 11.
Cette platine 2 est dotée de deux pattes formant saillie vers le haut auxquelles est fixé un élément de recouvrement et de protection 23 longiforme présentant une section droite en U tourné vers le bas. Cet élément de protection recouvre la majeure partie de la platine 2 et est assujetti à pénétrer dans le volume que détermine l'élément de recouvrement et de protection 15. Cette disposition permet d'assurer une continuité dans le recouvrement et la protection.

Dans sa partie postérieure, la platine 2 reçoit en fixation les deux bras latéraux 30, ces derniers étant avantageusement constitués par un profilé tubulaire de section droite rectangulaire.

Chaque cale arrière 3 est fixée sur la face supérieure plane du bras 30 correspondant et forme saillie au-dessus de cette dernière.
Dans la forme préférée de réalisation, sans que cela soit limitatif, chaque cale 3 est formée de deux plaques rectangulaires agencées en dièdre et fixées par soudage l'une à l'autre et au bras 30 correspondant.

Dans sa partie antérieure, la platine 2 reçoit les deux bras latéraux 40, ces derniers portant les cales avant 4. Avantageusement, les deux bras 40 sont liés l'un à l'autre et forment une seule et même pièce et cette dernière comporte une chape centrale 41 par laquelle elle est engagée en articulation sur un arbre 42 monté par ses extrémités sur deux ailes verticales, latérales 21 de la platine 2. Comme on peut le voir cet arbre 42 matérialise un axe géométrique horizontal d'articulation AA' autour duquel est amené à pivoter les cales avant 4 lorsque ces dernières sont mobilisées depuis leur position de repos vers leur position active et inversement. Cet axe géométrique AA' s'étend perpendiculairement à la direction du mouvement de la platine 2 sur le support.

Il y a lieu de noter que les cales avant 4 sont intégralement disposées d'un côté, et dans la forme de réalisation, en arrière d'un plan géométrique contenant l'axe d'articulation AA'. Ainsi lors de leur mouvement de pivotement autour de l'axe AA', depuis la position d'effacement vers la position active, mouvement qui s'effectue de l'arrière vers l'avant, les cales avant 4 se dégageront du sol sans frottement sur ce dernier. En outre en position active, ces cales 4 sont toujours situées d'un côté, et dans la forme de réalisation en arrière du plan précité. De cette manière leur poids engendre un moment de basculement qui les sollicite vers leur position d'effacement.

Préférentiellement, l'ensemble moteur 5 actionne également la ou les cales avant 4. À cet effet cet ensemble moteur 5 est lié cinématiquement aux cales 4 et plus précisément aux bras 40 par une transmission de mouvement apte à imprimer à chaque cale 4 un mouvement de basculement entre sa position d'effacement et sa positon active et inversement et ce immédiatement avant ou pendant l'entraînement de la platine 2 entre ses deux positions de repos et de calage et inversement.

Selon la forme préférée de réalisation, l'ensemble moteur 5 est constitué par un vérin du type hydraulique double effet ou pneumatique double effet ou électrique, articulé par l'extrémité de son corps à une chape fixée à la sole 12 et par l'extrémité de sa tige à la transmission de mouvement sus évoquée. Le vérin sera associé à un circuit de commande et de puissance approprié, connu en soi. Pour des raisons de sécurité et de simplicité, ce vérin sera du type hydraulique. Son circuit hydraulique de commande et de puissance comporte notamment une bâche constituant réserve d'huile, une pompe hydraulique apte à puiser l'huile dans la bâche et la délivrer au circuit hydraulique et au moins un distributeur hydraulique du type piloté, associé aux chambres avant et arrière du vérin. Ce distributeur présente un tiroir mobile, pouvant occuper plusieurs positions. Selon une première position de son tiroir, le distributeur est apte à alimenter la chambre avant du vérin en huile sous pression et placer la chambre arrière en relation de communication avec la bâche. Selon une deuxième position du tiroir, le distributeur est apte à alimenter la chambre arrière du vérin en huile sous pression et placer la chambre avant en relation de communication avec la bâche et selon une troisième position du tiroir, le distributeur est apte à isoler les deux chambres avant arrière du vérin de façon que ces dernières ne soient pas en relation de communication tant l'une avec l'autre qu'avec la bâche et qu'elles ne puissent pas recevoir de l'huile sous pression. Selon cette troisième position du tiroir, la pompe hydraulique par son orifice de délivrance du flux d'huile sous pression est relation de communication avec la bâche via le distributeur ou via tout autre organe hydraulique adapté. De tels circuits hydrauliques sont connus de la personne de l'art et ne seront pas ici décrits plus en détail.

On comprend que lorsque le tiroir du distributeur est placé selon sa troisième position la platine 2 ne peut être déplacée sur le support 1 et est fermement maintenue en position sur ce dernier. Ainsi lorsque la platine est en position antérieure et le tiroir du distributeur selon sa troisième position, la cale arrière 3 peut remplir son rôle de butée et s'opposer, lorsque l'une des roues arrière du véhicule vient à son contact par recul vers le quai, à la poursuite du mouvement de recul de ce véhicule. Ce dernier se trouve alors bloqué en position à distance du quai.

Pour maintenir le véhicule bloqué à quai, le tiroir du distributeur pourra être placé selon la troisième position ou bien la chambre correspondante du vérin pourra être maintenue en pression.

Dans une forme pratique de réalisation, la transmission de mouvement entre l'ensemble moteur 5 et la ou les cales avant 4 comprend un coulisseau 55 guidé en translation sur la platine 2, ce coulisseau 55 étant solidaire de l'extrémité de la tige du vérin par une chape et par un axe. Ce coulisseau reçoit en fixation au moins une crémaillère 56 avec laquelle est engrené un pignon denté 57 ou un secteur denté rigidement fixé à l'une des ailes de la chape centrale 41 de manière centrée par rapport à l'axe de pivotement AA'.
Ce coulisseau 55 est sollicité en poussée par au moins un organe élastique 59, l'action de poussée tendant à déplacer le coulisseau 55 vers une position correspondant à la position active des cales avant 4.

Comme dit précédemment, les positions extrêmes de chaque cale 4 sont matérialisées par des butées. Ces butées sont aptes à assurer, sans être détériorées, la transmission d'effort et de mouvement entre le coulisseau 55 et la platine 2. Ainsi lorsque la cale 4 parvient en butée, le mouvement de la tige du vérin 5 peut alors se transmettre intégralement à la platine mobile 2 laquelle alors avec les cales arrière 3 et avant 4 est entraînée en translation le long du support 1. On comprend donc que l'effort imprimé au coulisseau 55 par l'ensemble moteur 5 est transmis à la platine 2 par l'entremise de la butée correspondante, ce qui assure le déplacement de cette platine 2 le long du support 1.

Toujours dans une forme préférée de réalisation, la pièce commune constitutive des deux bras 40 est constituée par une cornière. La chape centrale 41 est fixée sur la face intrados de l'une des ailes de cette cornière. En position d'effacement de chaque cale avant 2, cette aile par sa bordure libre vient porter contre les rails de guidage 11, ces derniers constituant l'une des butées. En position active de chaque cale avant 4, la face intrados de l'autre aile vient porter contre les ailes 21, ces dernières constituant l'autre butée.

Selon la forme préférée de réalisation, le coulisseau 55 est guidé sur la platine 2 essentiellement par des rails 58 latéraux, fixés sur le guide 20 de cette dernière.

Le déploiement ou la rétraction de la tige du vérin 5 engendre le mouvement du coulisseau 55 combiné ou non au mouvement de translation de la platine d'entraînement 2 et par voie de conséquence, le pivotement de chaque cale 4 autour de l'axe d'articulation AA' entre ses deux positions active et d'effacement. En conséquence, chaque cale avant 4 est amenée soit vers sa position active, soit vers sa position d'effacement du fait notamment de la rétraction de la tige du vérin 5 ou de son déploiement. Plus particulièrement, le mouvement de la tige du vérin en vue de déployer les cales avant 4, entraîne d'abord le mouvement du coulisseau 55 et concomitamment, le mouvement des cales 4 aidé en cela par l'action de poussée de l'organe élastique 59. Ensuite, après déploiement complet des cales avant 4, le mouvement de la tige du vérin 5 engendre le mouvement de la platine 2 vers sa position de calage. Le mouvement inverse de la tige du vérin 5 à partir de la position de calage engendrera d'abord le mouvement simultané du coulisseau, des cales avant 4 et de la platine 2 et ce tant que les cales avant 4 pourront prendre appui sur les roues concernées du véhicule. Ensuite, lorsque les cales 4 auront atteint leur position d'effacement, le mouvement de la tige du vérin sera intégralement transmis à la platine 2 par l'intermédiaire de la butée correspondante et ladite platine 2 sera ramenée en position antérieure de repos.

Dans la forme préférée de réalisation, le vérin 5 s'étend en arrière du coulisseau 55 et agit en traction sur ce dernier pour d'abord amener les cales avant 4 en position active et ensuite les amener contre les roues du dernier train de roues ou du train intermédiaires du véhicule et provoquer par traction le mouvement de recul du véhicule vers le quai. Cependant il est bien évident que cette disposition n'est donnée qu'à titre d'exemple et que ce vérin 5 pourra s'étendre en avant du coulisseau 55 et agir alors en poussée sur ce dernier pour amener les cales avant 4 en position active et déplacer le véhicule vers le quai.

En variante, la transmission de mouvement peut comprendre un pivot constitué par un arbre fixé à chacune des ailes de la chape 41 à distance de l'axe AA'. À ce pivot sera articulée la tige du vérin, par son extrémité.

Comme dit précédemment, le coulisseau 55 est sollicité en poussée par au moins un organe élastique 59. Cet organe élastique est monté entre le coulisseau 55 et la platine 2 et applique sur le coulisseau 55 un effort de poussée sous l'effet duquel ce dernier tend à se déplacer selon un sens de mouvement correspondant au pivotement des cales avant 4 vers leur position active. À cet effet, le coulisseau 55 comporte deux glissières horizontales 550, parallèles à la direction du mouvement de la platine 2, encastrées par une de leur zone terminale arrière dans un bloc support 551 monté en fixation sur le coulisseau 55. Par ailleurs, ces glissières 550 sont montées chacune en coulissement dans un alésage de guidage formé de manière traversante dans un boîtard de palier 25 fixé à la platine 2. Un organe élastique 59 sous forme d'un ressort à spires est monté sur chaque glissière 550, en compression entre le bloc support 551 et le boîtard de palier 25.

Chaque glissière 550, en extrémité avant, recevra dans une gorge appropriée, un anneau élastique formant butée annulaire. On évite ainsi que sous l'effet de l'action des ressorts 59 les glissières 550 s'extraient de leur palier de guidage.

Selon la forme préférée de réalisation, la transmission de mouvement comporte deux crémaillères 56 et la chape centrale 41 est équipée de deux pignons dentés 57 coopérant respectivement en engrènement avec les deux crémaillères 56.

Il y a lieu de noter que les deux ailes de la cornière constitutive des bras 40, quelle que soit la position angulaire des cales avant 4 constituent deux écrans aptes à protéger de la pluie et des salissures au moins le pignon denté 57.

Selon encore une variante d'exécution, les cales avant 4 sont actionnées entre leur position d'effacement et leur position active et inversement par un organe moteur spécifique.

Avantageusement, chaque cale arrière 3 pourra être équipée d'un détecteur de présence ou d'un capteur d'effort apte à signaler la présence des roues du dernier train de roues contre les cales arrière 3.

Le dispositif de calage selon l'invention pourra être manipulé par un opérateur ce dernier agissant alors pour ce faire sur un organe de commande connu en soi intégré au circuit de commande et de puissance de l'ensemble moteur 5. À l'aide de cet organe de commande, l'opérateur pourra agir sur le dispositif de calage pour amener à quai le véhicule et une fois le transbordement effectué, commander l'effacement des cales avant 4 pour libérer le véhicule.

Le véhicule peut être amené d'une manière automatique contre le quai, hors de la présence d'un opérateur. Dans ce cas de figure, le circuit de commande de l'ensemble moteur 5 sera équipé d'un détecteur de présence apte à détecter tout obstacle et toute personne sur la trajectoire de l'arrière du véhicule et commander en cas de détection l'arrêt de l'ensemble moteur 5.

Avantageusement le dispositif de calage selon l'invention pourra être équipé d'un moins un capteur de fin de course pour détecter la position antérieure de repos de la platine et/ ou d'un capteur de fin de course pour détecter la position postérieure de calage de la platine, et/ou un capteur de fin de course pour détecter la position d'effacement des cales avant 4 et/ou un capteur de fin de course pour détecter la position active des dites cales avant.

Enfin chaque cale avant 4 pourra intégrer au moins un rouleau horizontal, perpendiculaire à la direction de déplacement de la platine 2 adapté à venir en appui contre la ou les roues du train de roues correspondant lors de la poussé à quai du véhicule. Cette disposition permet d'éliminer ou de réduire fortement tout frottement entre la cale avant 4 et la ou les roues lors du mouvement de poussée du véhicule.

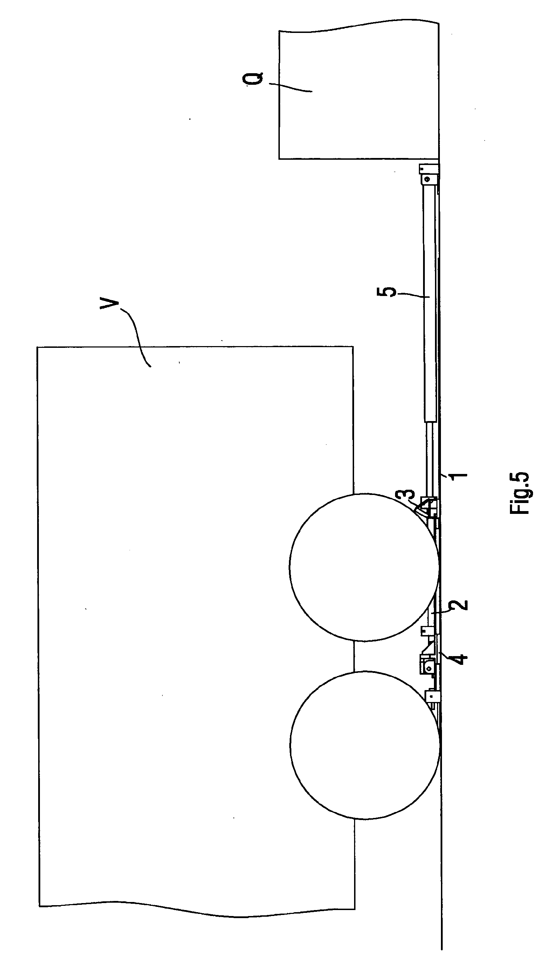

En se référant aux figures 5 à 9 on va expliquer maintenant le fonctionnement du dispositif selon l'invention.

On observe en figure 5 un quai Q de chargement/déchargement et une aire de stationnement A à quai, d'un véhicule se développant en avant de ce quai, sur laquelle est installé un dispositif de calage à quai selon l'invention. Sur cette figure, on peut observer que la platine 2 du dispositif de calage est en position antérieure de repos, et que chaque cale avant 4 est en position d'effacement en appui sur le sol. On observe également que chaque cale arrière 3 forme saillie et se situe sur la trajectoire des roues du dernier train de roues d'un véhicule V en phase d'acculement contre le quai Q de chargement et déchargement.

Sur cette figure on peut observer que lors du mouvement de recul du Véhicule V les roues du dernier train de roues sont parvenues contre les cales arrière 3, ces dernières interdisant alors la poursuite du mouvement de recul du véhicule vers le quai Q. On remarque sur cette figure que la distance séparant l'arrière du véhicule V du quai de chargement/déchargement Q est suffisante pour prévenir l'accident par écrasement des personnes entre le quai et ce véhicule. On remarque également sur cette figure que chaque cale avant 4 se situe au droit de l'intervalle entre deux trains arrière de roues successifs en l'espèce entre le premier train et le dernier.

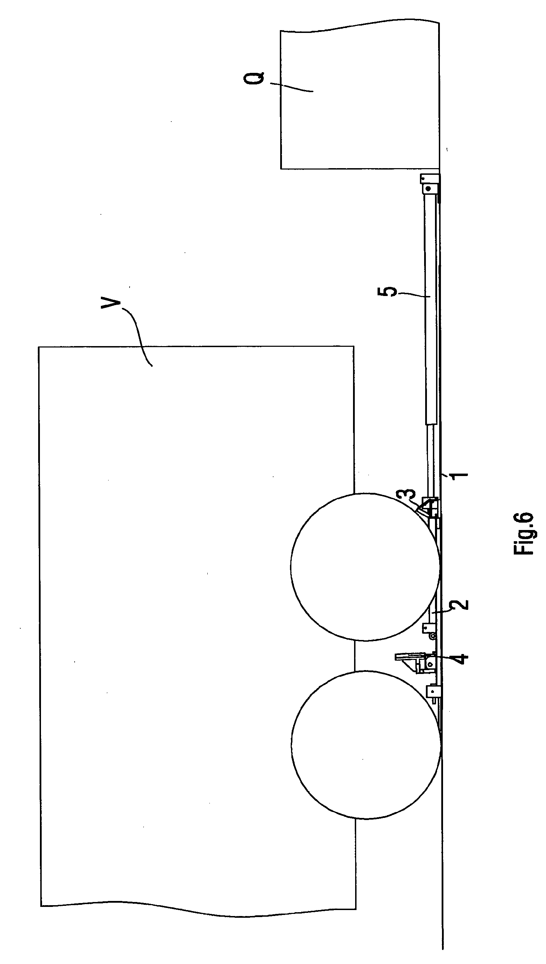

En figure 6 on peut remarquer que l'actionnement de la tige du vérin 5 dans le sens de sa rétraction dans le corps de ce dernier et l'action exercée par les organes élastiques 59 sur le coulisseau 55 ont entraîné le déplacement en translation du coulisseau 55 et par voie de conséquence l'entraînement de chaque cale avant 4 vers sa positon active, par pivotement autour de l'axe AA', ce mouvement de pivotement résultant de l'entraînement en rotation du pignon 57 denté par la crémaillère 56. On observe sur cette figure que chaque cale avant 4 est en position de butée et est écartée de la roue du dernier train de roues. Dans cette position, tout effort de traction exercé par la tige du vérin 5 sur le coulisseau 55 sera intégralement transmis à la platine 2 par l'intermédiaire des crémaillères 56, des pignons dentés 57 et de la butée correspondante.

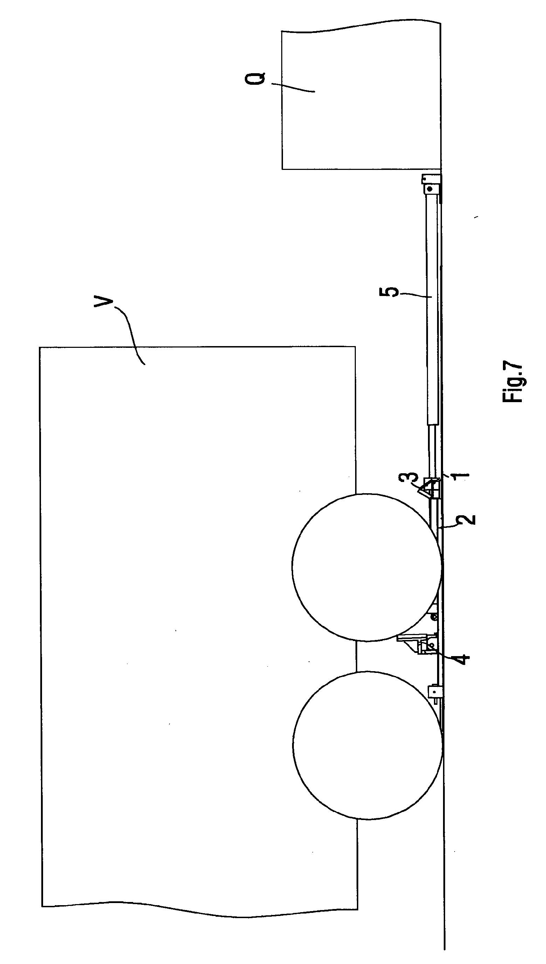

En figure 7 on peut voir que chaque cale avant 4, par déplacement de la platine 2 sous l'effet du mouvement de rétraction de la tige du vérin 5, a été amenée contre la roue correspondante du dernier train de roues. On peut remarquer sur cette figure que les cales arrière 3 se trouvent maintenant écartées des roues du dernier train de roues.

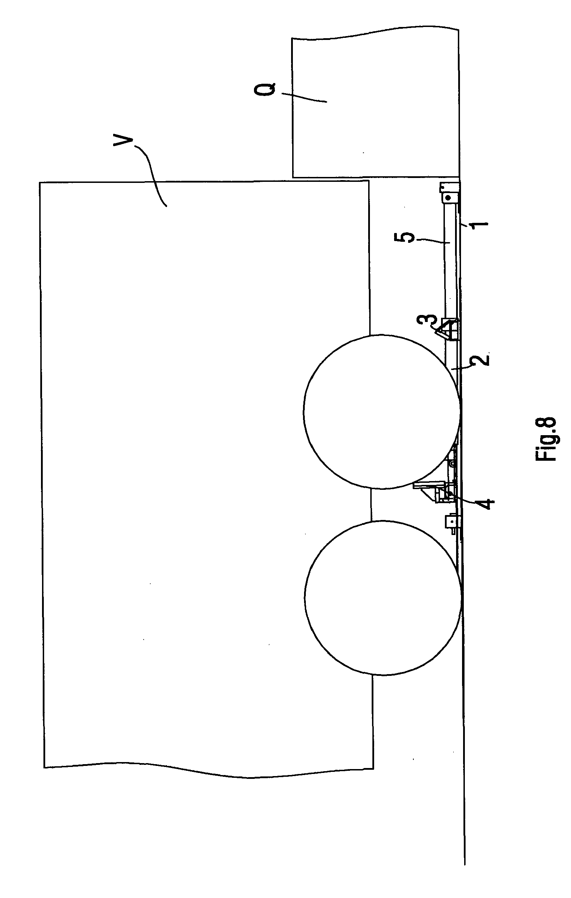

En figure 8 on peut remarquer que par rétraction de la tige du vérin 5 dans le corps de ce dernier et par déplacement de la platine 2 vers sa position de calage, l'action de poussée de chaque cale avant 4 sur la roue correspondante du dernier train de roues a engendré le mouvement de recul du véhicule V vers le quai Q. On remarque sur cette figure que le véhicule V est maintenu contre le quai par le dispositif de calage.

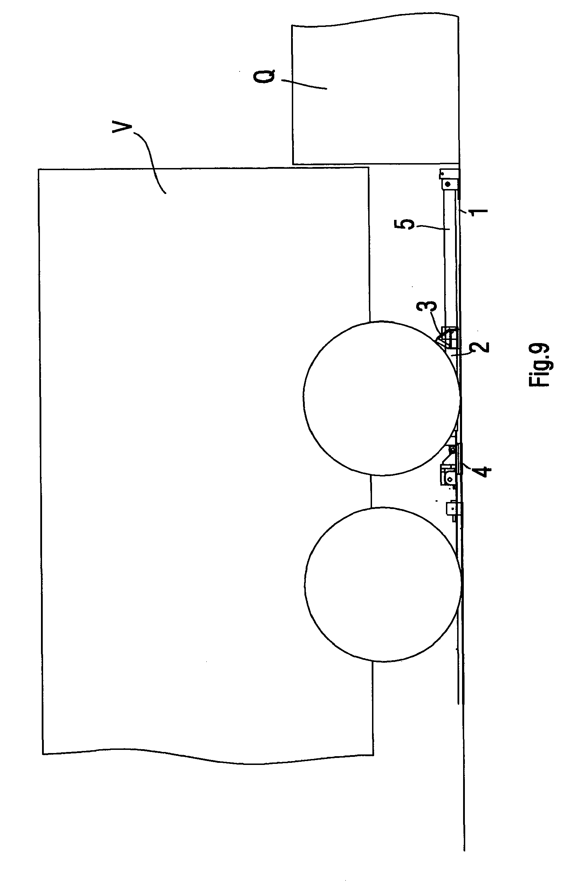

En figure 9 on peut remarquer que la tige vérin 5 ayant été actionnée dans le sens du déploiement, le coulisseau 55 s'est trouvé entraîné en translation sur la platine 2 de sorte que la crémaillère 56 portée par le coulisseau 55 a entraîné le pignon denté 57 en rotation et par voie de conséquence chaque cale avant 4 vers sa position d'effacement. Dans cette position le véhicule V de transport se trouve libéré de l'emprise du dispositif de calage et peut quitter le quai Q.

On vient de décrire le mode de fonctionnement du dispositif pour le calage d'un véhicule comportant deux essieux arrière mais ce même dispositif avec ce même mode de fonctionnement peut être utilisé pour le calage d'un véhicule comportant trois essieux arrière, les cales avant 4 agissant toujours sur les roues du dernier train de roues. Le dispositif peut être dimensionné en sorte de pouvoir agir en poussée non plus sur les roues du dernier train de roues mais sur les roues du train intermédiaire. Le mode de fonctionnement de ce dispositif sera conforme à ce qui a été précédemment décrit.

La présente invention dans sa première forme de réalisation peut recevoir tous aménagements et variantes du domaine des équivalents techniques. Ainsi le support 1, la platine 2 l'ensemble moteur 5 et la transmission de mouvement entre l'ensemble moteur 5 et la platine 2 pourront être disposés dans un coffre prévu pour être enterré dans le sol. Dans ce cas de figure, les bras 30 et 40 seront en surélévation par rapport à la platine pour évoluer sur le sol.

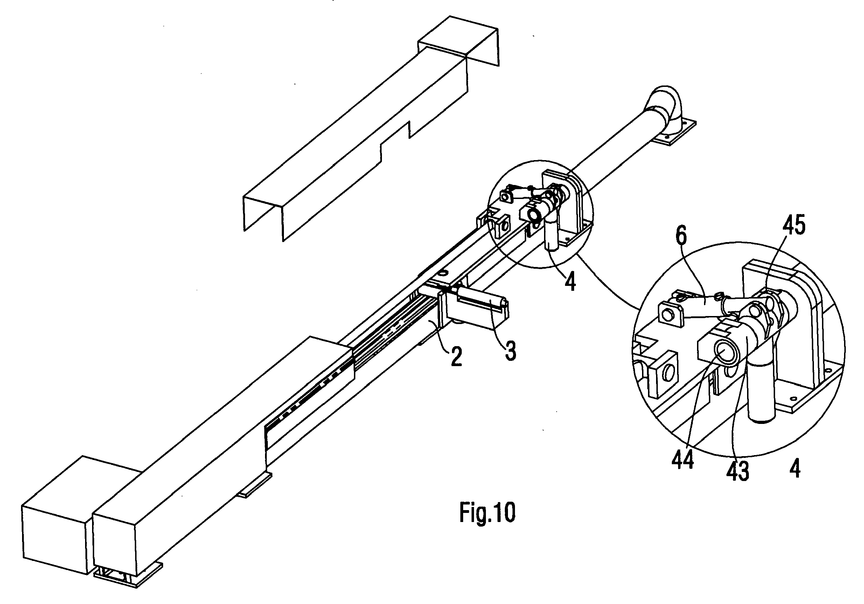

On vient de décrire un dispositif dont l'ensemble moteur 5 et la platine 2 occupent une position centrale sur l'aire de stationnement à quai du véhicule, le véhicule en stationnement à quai venant au-dessus du dispositif, mais en variante, afin de libérer de tout obstacle cette aire de stationnement à quai, le dispositif pourra être latéral à cette dernière comme on peut le voir sur les figures 10 à 16 illustrant quatre autres formes de réalisation du dispositif selon l'invention.

En figures 10 à 14 sont montrées des deuxième, troisième et quatrième formes de réalisation du dispositif selon l'invention. On peut voir que pour ces différentes formes de réalisation, la cale arrière 3 est constituée d'un bras horizontal s'étendant latéralement à la platine 2 tout en étant fixé à cette dernière. L'ensemble moteur 5 équipant ces deuxième, troisième et quatrième formes de réalisation, sera identique à celui équipant la première forme de réalisation hormis le fait que la tige ne sera pas fixée à une transmission de mouvement mais directement à la platine 2. Cet ensemble moteur 5 sera donc constitué d'un vérin hydraulique double effet associé à un circuit hydraulique de commande et de puissance tel que précédemment décrit.

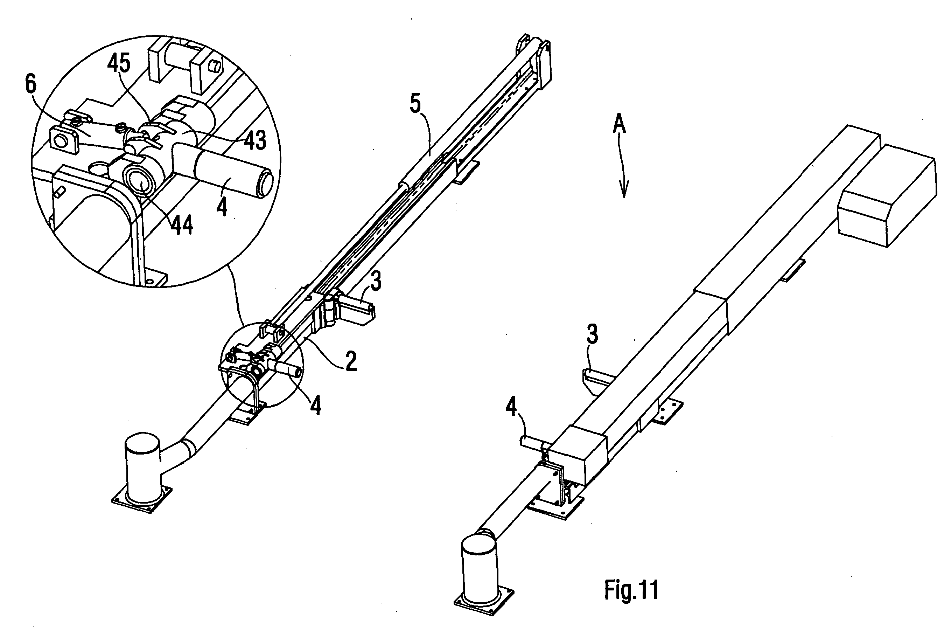

En figures 10 et 11 est montré le dispositif de calage selon la deuxième forme de réalisation. On peut voir sur ces figures que la ou chaque cale avant 4 est montée de manière articulée sur la platine autour d'un axe horizontal parallèle à la direction de déplacement de ladite platine 2, la cale avant 4, en position d'effacement, étant verticale et de préférence orientée vers le bas et en position active, étant horizontale et écartée du sol. Dans cette forme de réalisation, la cale avant 4 est constituée par un bras cylindrique fixé par une de ses deux extrémités radialement à un fourreau 43 présentant un alésage axial traversant par lequel il est engagé en rotation sur un arbre horizontal 44 tenu par ses deux extrémités par des paliers supportés par la platine 2 et fixés à cette dernière. Le fourreau 43 présente de plus une chape 45 supportant un axe recevant en articulation l'extrémité de la tige d'un organe moteur d'actionnement 6 de la cale avant entre sa position active et sa positon d'effacement et inversement. Cet organe moteur d'actionnement 6 est constitué de préférence par un vérin hydraulique ou pneumatique ou électrique, articulé par son corps à la platine 2. Avantageusement le bras constitutif de la cale 4 est de forme cylindrique et reçoit en emmanchement un rouleau. Grace au rouleau, est évité tout frottement entre la cale et la roue du véhicule lorsque ce dernier est amené à quai.

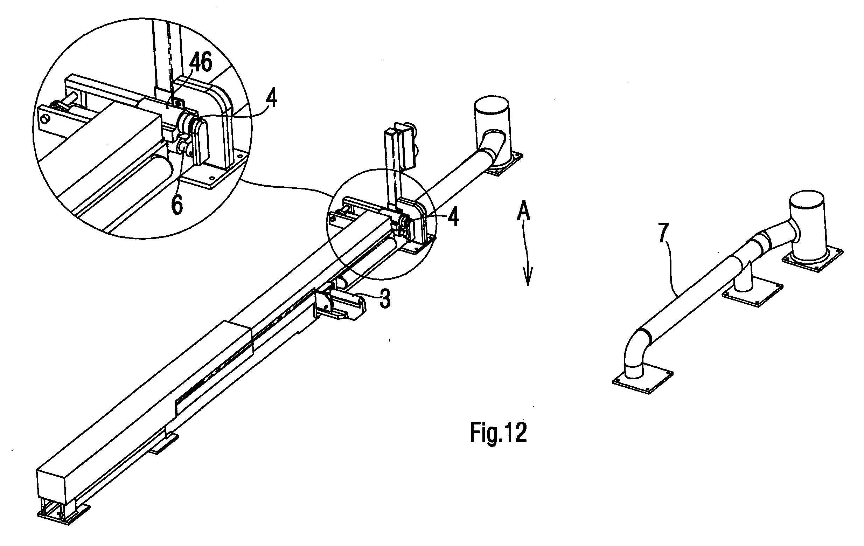

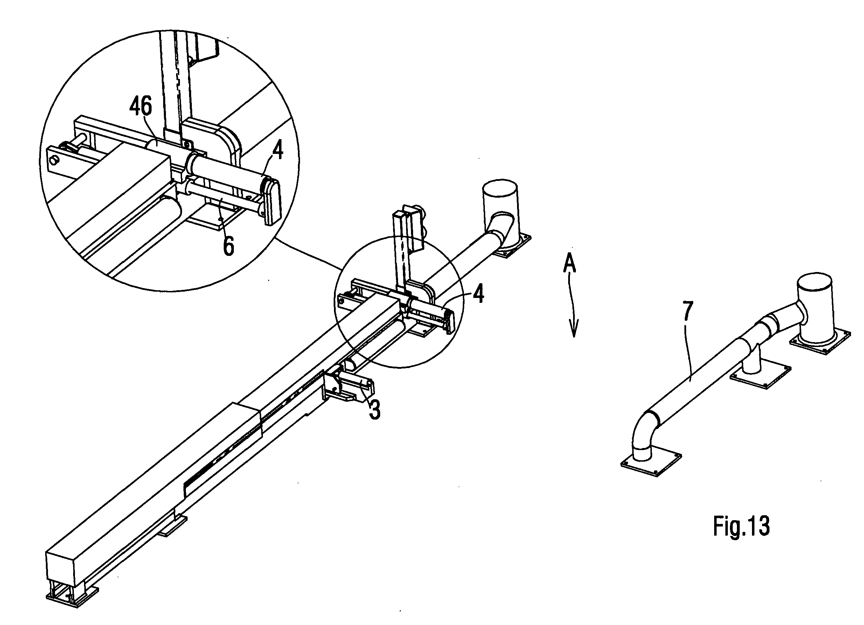

En figures 12 et 13 est montré le dispositif de calage selon la troisième forme de réalisation. On peut voir sur ces figures que la ou chaque cale avant 4 est constituée par un bras horizontal se développant de manière perpendiculaire à la direction de déplacement de la platine 2. Ce bras est monté en coulissement dans un guide tubulaire 46 fixé à la platine 2. Cette cale est actionnée entre sa position d'effacement et sa position active par un organe moteur 6 constitué de préférence par un vérin du type hydraulique, pneumatique ou électrique. Préférentiellement ce vérin est du type hydraulique double effet et sera associé à un circuit hydraulique approprié comportant notamment un distributeur hydraulique comportant un tiroir pouvant occuper trois positions. La première de ces positions correspond à l'alimentation en huile sous pression de la chambre arrière du vérin et à la mise à la bâche de la chambre avant, la deuxième position correspond à l'alimentation en huile sous pression de la chambre avant et à la mise à la bâche de la chambre arrière et enfin la troisième position correspond à l'isolement de ces deux chambres, ces dernières ne pouvant recevoir de l'huile ni se vider. Le tiroir est placé en première position pour mobiliser la cale 4 de sa position d'effacement vers sa position active et est placé selon sa deuxième position pour mobiliser la cale depuis sa position active vers sa position d'effacement.

Le vérin 6 est fixé par sa tige à l'extrémité correspondante du bras 4 et par son corps à la platine 2. En position d'effacement, la cale avant 4 est décalée latéralement par rapport à la trajectoire des roues arrière du véhicule tandis qu'en position active, la cale avant, par déplacement de la platine 2 vers sa position de calage pourra venir agir en poussée contre l'une des surfaces de roulement de la roue correspondante du véhicule.

Dans ces deux dernières formes de réalisation, la cale avant 4 et plus particulièrement le bras horizontal constitutif de cette dernière, pourra être équipée d'un rouleau horizontal de façon à réduire l'intensité des forces de frottement contre la roue du véhicule lors du mouvement de poussée vers le quai.

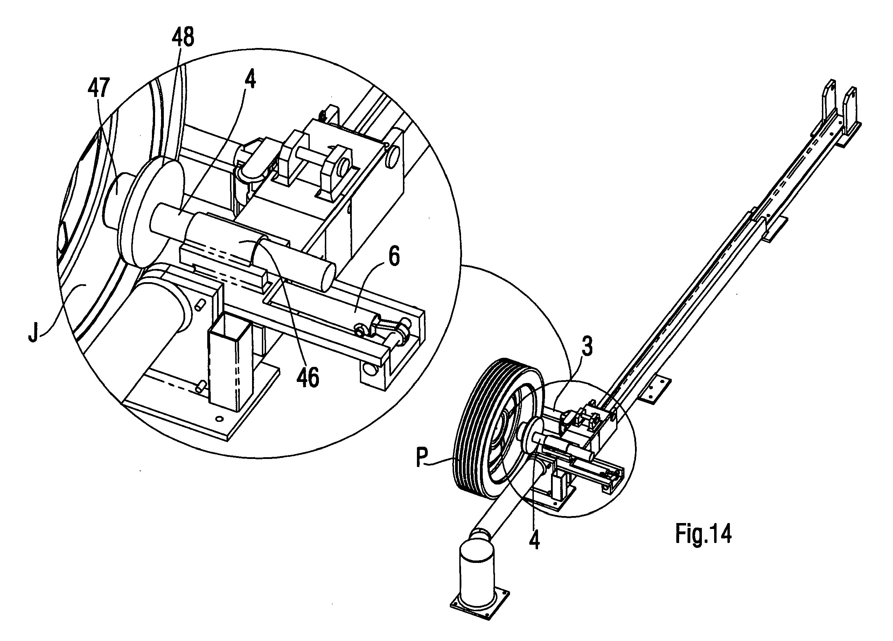

Dans les diverses formes de réalisation telle que décrites, chaque cale avant 4, lorsque la platine 2 est mobilisée vers la position de calage, vient agir en poussée sur la bande de roulement du pneumatique de la ou de chaque roue du train correspondant du véhicule. En variante, selon la quatrième forme de réalisation, comme représenté en figure 14, la cale avant 4 du dispositif selon la troisième forme de réalisation, est équipée d'un galet d'extrémité 47 et, lorsque la platine 2 est mobilisée vers la position de calage, vient agir en poussée par l'intermédiaire de ce galet 47, non pas contre la bande de roulement du pneumatique P, mais contre la surface cylindrique concave de la jante J de la roue. Ainsi en position déployée, la cale avant 4, par le galet 47, n'est pas positionnée en arrière de la roue mais dans la jante J de cette dernière. De préférence, le galet 47 agit sur la surface cylindrique de la jante dans une région inférieure par exemple située sensiblement au droit de l'axe de l'essieu de façon que la roue soit fermement maintenue par la cale 4 en appui contre le sol. Cette disposition réduit le risque que par mouvement de recul du véhicule sous l'effet de l'action de son propre moteur, la roue arrière de ce dernier passe au-dessus de la cale arrière 3 et franchise la butée que constitue cette dernière. Ainsi la cale arrière pourra être à faible distance du sol.

De préférence, afin de limiter la pénétration du galet 47 dans la jante J, ce dernier sera équipé d'une butée 48, sous forme de disque, destinée à venir en appui contre le flanc latéral du pneumatique.

Il y a lieu de noter que la cale arrière 3 n'est pas représentée sur la figure 14.

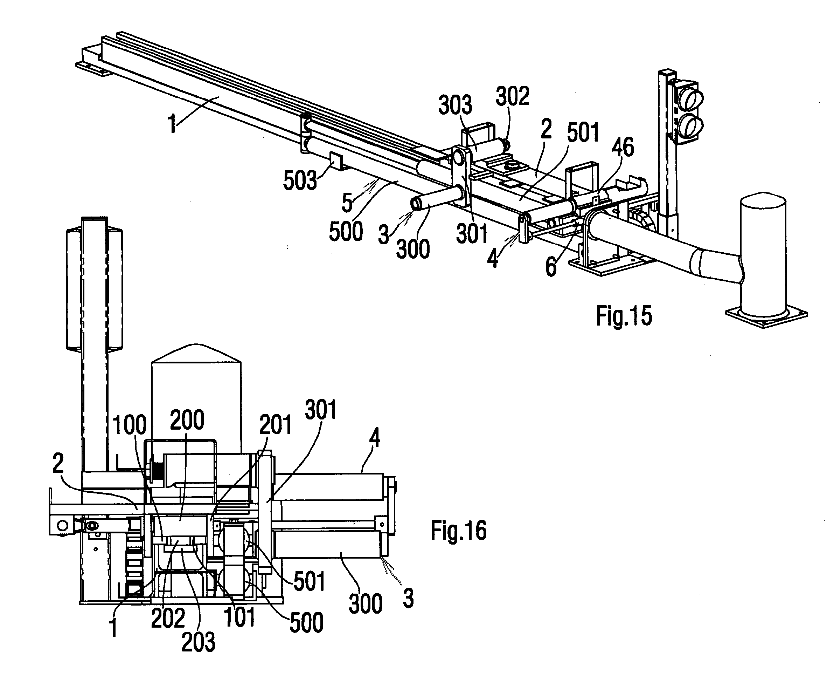

En figures 15 à 16 est représenté un cinquième mode de réalisation du dispositif de calage à quai selon l'invention. Selon cette forme de réalisation, la platine 2 se présente par exemple sous la forme d'un chariot monté de manière coulissante sur le support 1. Selon une forme pratique de réalisation, le support 1 se présente sous la forme d'un rail de guidage tubulaire présentant une paroi supérieure horizontale 100 d'appui et de guidage comportant une fente traversante médiane 101 s'étendant dans le sens de la longueur du profilé. Selon cette forme pratique de réalisation, le chariot formant la platine 2, comporte deux galets 200 d'appui sur la paroi supérieure 100 du support,. Ces galets sont espacés l'un de l'autre et sont montés chacun en rotation, selon un axe horizontal perpendiculaire à la direction de déplacement de la platine 2, dans une chape 201 portée par cette platine. Par ailleurs, le chariot constitutif de la platine 2, présente deux doigts verticaux 202, espacés, engagés au travers de la fente 101 et dotés en extrémité inférieure, dans le rail de guidage constitutif du support 1, d'un collet 203 d'un diamètre supérieure à la largeur de la fente 101. Cette disposition est propre à s'opposer à ce que la platine 2 se désolidarise du support 1 sous l'effet d'une action verticale orientée vers le haut. En présence d'une telle action la platine 2 peut éventuellement se soulever légèrement, mais le collet 203 de chaque doigt 201, en venant porter contre la face interne au profilé, de la paroi supérieure horizontale 100, s'oppose à toute désolidarisation. Pour réduire l'amplitude de cet éventuel mouvement vertical, l'écart entre la collet 203 de chaque doigt 202 et la paroi 100 sera limité à la valeur d'un jeu fonctionnel de l'ordre du millimètre.

Selon une forme pratique de réalisation, la cale arrière 3 est constituée par un bras horizontal 300 porté par un levier pivotant 301 articulé par son extrémité supérieure à la platine 2 et ce selon un axe horizontal perpendiculaire à la direction de déplacement de la platine 2. Plus précisément, ce levier pivotant 301 reçoit en fixation en extrémité supérieure, un arbre horizontal 302 engagé de manière libre en rotation dans un alésage de guidage en rotation pratiqué dans un fourreau 303 rigidement fixé à la platine 2. Le bras horizontal 300 que comporte la cale arrière 3 sera formé d'un rouleau librement monté en rotation sur un moyeu cylindrique rigidement fixé par une de ses deux extrémités au levier pivotant 301. En raison de cette disposition, l'action de l'une des roues arrière du véhicule sur le bras 300, lors du mouvement de recul du véhicule, entraînera le pivotement de la cale arrière 3 vers le haut jusqu'à atteindre une position finale angulaire s'opposant au déplacement du véhicule vers l'arrière.

Ainsi la cale arrière 3, en l'absence de toute sollicitation, occupera une position de repos selon laquelle le levier pivotant 301 est vertical et le bras 302 est à faible écartement du sol et une position de calage selon laquelle le levier 301 est incliné par rapport à la verticale, vers l'arrière et le bras 300 est écarté du sol.

De par cette disposition, le risque que la bavette de protection que présente chaque roue du train arrière soit endommagée, est réduit. En effet lors du mouvement du véhicule vers l'arrière, le bras horizontal 300 de la cale arrière 3, en remontant le long du pneumatique de la roue reste au contact de ce dernier et peut s'insérer entre la bavette et le pneumatique.

Avantageusement, la position finale de la cale arrière 3 est détectée par un capteur non représenté, monté sur la platine 2 et actionné soit par le levier 301 soit par l'arbre horizontal 302 que présente le levier 301. La valeur angulaire de la position finale, mesurée à partir de la verticale, dépend du diamètre de la roue du véhicule, ce diamètre étant typiquement compris comme indiqué précédemment entre 800 mm et 1100 mm. Pour cette raison le capteur sera apte à détecter ces différentes valeurs finales. L'information délivrée par ce capteur sera exploitée par le circuit de commande de l'ensemble moteur 5 pour autoriser l'activation de ce dernier et par voie de conséquence le mouvement de la platine 2 depuis sa position antérieure vers sa position postérieure étant entendu que de mouvement s'effectue sous le contrôle et la commande d'un préposé à cette tâche.

L'ensemble moteur 5 dans cette dernière forme de réalisation, est constitué par deux vérins hydrauliques double effet 500, 501, disposés horizontalement l'un au-dessus de l'autre pour des problèmes d'encombrement et ce de manière parallèle à la platine 2. Ces deux vérins 500, 501 présentent des longueurs de corps différentes et sont solidaires l'un de l'autre par une pièce rigide de liaison recevant en fixation l'extrémité de leur tige. L'un de ces vérins 500, le plus long, est articulé par son corps au support 1. L'autre vérin 501 est articulé par son corps à la platine 2. La chambre avant du vérin 500 est connectée par une conduite hydraulique à la chambre arrière du vérin 501 tandis que la chambre avant de ce vérin 501 est connectée par une conduite hydraulique à la chambre arrière du vérin 500. En outre la tige de l'un des vérins par exemple le vérin 501, en position antérieure de repos de la platine 2, est totalement déployée tandis que la tige de l'autre vérin, toujours en position antérieure de la platine 2, est totalement rétractée dans le corps du vérin. Ces dispositions malgré un encombrement réduit permettent d'augmenter la course de la platine 2, cette course étant égale à la somme des courses des tiges des vérins.

Le circuit hydraulique de commande et de puissance que comporte cet ensemble moteur comprend essentiellement une bâche constituant réserve d'huile, une pompe hydraulique apte à puiser l'huile dans la bâche et au moins un distributeur hydraulique du type piloté, associé aux chambres avant et arrière de ces vérins. Ce distributeur présente un tiroir mobile pouvant occuper trois positions. Selon une première position du tiroir la chambre arrière du vérin 500 et la chambre avant du vérin 501 sont alimentées tandis que les autres chambres de ces vérins sont mises en communication avec la bâche. Selon une deuxième position du tiroir, la chambre avant du vérin 500 et la chambre arrière du vérin 501 sont alimentées et les deux autres chambres sont mises en communication avec la bâche. Enfin selon une troisième position, les différentes chambres de ces vérins sont isolées et ne peuvent plus recevoir d'huile ou en délivrer. Le tiroir du distributeur est disposé selon la première position, pour mouvoir la platine 2 de la position antérieure vers sa position de calage. Ce tiroir est disposé selon la deuxième position pour mouvoir la platine 2 de la position postérieure vers sa position antérieure et le tiroir est disposé selon la troisième position, pour interdire tout mouvement de la platine 2 dans un sens ou dans l'autre.

Le tiroir est disposé selon sa troisième position pour maintenir la platine 2 en position de repos afin que la butée arrière 4 constitue un obstacle au recul du véhicule vers le quai et assure le maintien du véhicule à distance du quai. Le tiroir sera aussi disposé selon sa troisième position pour maintenir la platine 2 en position de calage afin de maintenir le véhicule à quai.

Avantageusement le vérin inférieur 500 est maintenu de manière parallèle à la platine 2 par un étrier 503 venant encadrer son corps, cet étrier étant fixé rigidement au support 1.

Toujours selon cette forme de réalisation, la cale avant 4 est avantageusement constituée par une cale selon la troisième ou quatrième forme de réalisation du dispositif. Ainsi cette cale avant 4 est toujours constituée par un bras horizontal se développant de manière perpendiculaire à la direction de déplacement de la platine 2 et monté en coulissement dans un guide tubulaire 46 fixé à la platine 2. Cette cale est 4 toujours actionnée entre sa position d'effacement et sa position active par un organe moteur 6 constitué par un vérin par exemple du type hydraulique, double effet associé à un circuit hydraulique approprié comportant notamment un distributeur hydraulique trois positions comme décrit précédemment. Ce vérin 6 est toujours fixé par sa tige à l'extrémité correspondante du bras constitutif de la cale et par son corps à la platine 2.

Avantageusement, le dispositif dans les quatre dernières formes de réalisation précédemment décrites, comporte à l'avant une forme de guidage favorisant l'introduction des trains de roues sur l'aire de stationnement A.

L'aire A de stationnement à quai peut être équipée d'un seul dispositif selon l'une des deuxième troisième, quatrième ou cinquième forme de réalisation, mais avantageusement, chaque aire de stationnement, comme on peut le voir sur les figures 10 et 11 est équipée de deux dispositifs selon l'invention, occupant respectivement des positions latérales gauche et droite par rapport à l'aire de stationnement A. Ces dispositifs sont prévus pour coopérer respectivement avec les roues droites et gauches de l'essieu correspondant du véhicule.

Alternativement, comme représenté en figure 12 et 13 ne pourra être prévu qu'un seul dispositif latéral à l'aire de stationnement A et un guide 7 écarté du dispositif et bordant latéralement l'autre côté de l'aire de stationnement.

## Revendications

1. Dispositif de calage à quai d'un véhicule de transport de marchandises, comprenant un support horizontal (1) prévu pour être ancré au sol face à un quai de chargement, une platine horizontale (2) montée en coulissement sur le support horizontal (1), une cale avant (4) mobile de poussée, portée par la platine horizontale (2) ladite platine (2) étant actionnée en coulissement le long du support (1) entre une position antérieure de repos et une position postérieure de calage à quai du véhicule de transport par un ensemble moteur (5) lequel est également apte à immobiliser la platine (2) tant en position antérieure de repos qu'en position de calage à quai et la maintenir dans ces positions, la cale avant (4) de poussée pouvant occuper une position d'effacement selon laquelle elle est écartée de la trajectoire des roues arrière du véhicule et une position active selon laquelle d'une part elle est disposée en regard de l'une des surfaces de révolution de l'une des roues arrière du véhicule et d'autre part, par déplacement de la platine (2) vers sa position de calage, peut venir agir en poussée sur cette surface de révolution **caractérisé en ce qu'**il comprend une cale arrière (3), prévue pour constituer butée au dernier train de roues arrière du véhicule à caler à quai et stopper la progression du véhicule vers le quai afin de préserver une distance de sécurité entre le quai et l'arrière du véhicule, ladite cale arrière (3) étant solidaire de ladite platine (2) et portée fixement par ladite platine (2), et ladite cale avant (4) étant à distance de la cale arrière (3).

2. Dispositif de calage selon la revendication 1, prévu pour acculer à quai des véhicules possédant au moins un train de roues arrière **caractérisé en ce que** la distance entre la cale arrière (3) et la cale avant (4) est adaptée au diamètres des roues du dernier train arrière des véhicules de transport et que cette distance est telle que lorsque le dernier train de roues arrière est en appui contre la ou chaque cale arrière (3), la ou chaque cale avant (4), en position de repos, est disposée en regard d'une zone libre située immédiatement en avant de la bande de roulement du pneumatique de l'une au moins des roues du dernier train arrière.

3. Dispositif de calage selon la revendication 1, prévu pour acculer à quai des véhicules possédant au moins deux trains de roues arrière **caractérisé en ce que** la distance entre la cale arrière (3) et la cale avant (4) est adaptée au diamètre des roues des trains arrière des véhicules de transport et que cette distance est telle que lorsque le dernier train de roues arrière est appui contre la ou chaque cale arrière (3), la ou chaque cale avant (4), en position de repos est disposée en arrière du premier train de roues arrière et à écartement du dernier train de roues arrière de façon à pouvoir être librement actionnée vers sa position active et ensuite lors du mouvement de la platine vers la position de calage, pouvoir venir agir directement en poussée sur le train de roues immédiatement en arrière, ce train de roues pouvant être le dernier train de roues du véhicule ou le ou l'un des trains intermédiaires.

4. Dispositif de calage selon l'une quelconque des revendications précédentes, **caractérisé en ce que** chaque cale arrière (3) et chaque cale avant (4) au moins en position active, sont disposées latéralement à la platine (2).

5. Dispositif de calage selon l'une quelconque des revendications précédentes, **caractérisé en ce que** la ou chaque cale avant (4) est entraînée entre la position d'effacement et la position active et inversement par un organe moteur.

6. Dispositif de calage selon l'une quelconque des revendications 1 à 5, **caractérisé en ce que** la ou chaque cale avant (4) est montée de manière articulée sur la platine autour d'un axe horizontal parallèle à la direction de déplacement de ladite platine (2), la cale avant (4) en position d'effacement étant verticale et en position active étant horizontale et écartée du sol.

7. Dispositif de calage selon la revendication précédente, **caractérisé en ce que** la cale avant (4) est constituée par un bras cylindrique fixé parune de ses deux extrémités radialement à un fourreau (43) présentant un alésage axial traversant par lequel il est engagé en rotation sur un arbre horizontal (44) tenu par ses deux extrémités par des paliers supportés par la platine (2) et que le fourreau (43) présente une chape (45) supportant un axe recevant en articulation l'extrémité de la tige d'un organe moteur d'actionnement (6) de la cale avant entre sa position active et sa positon d'effacement et inversement.

8. Dispositif de calage selon l'une quelconque des revendications 1 à 5, **caractérisé en ce que** la ou chaque cale avant (4) est constituée par un bras horizontal se développant de manière perpendiculaire à la direction de déplacement de la platine (2), ledit bras étant monté en coulissement dans un guide tubulaire (46) fixé à la platine (2).

9. Dispositif de calage selon la revendication précédente, **caractérisé en ce que** la cale (4) est actionnée entre sa position d'effacement et sa position active par un organe moteur (6) constitué par un vérin fixé par sa tige à l'extrémité correspondante du bras (4) et par son corps à la platine (2), en position d'effacement, la cale avant (4) étant décalée latéralement par rapport à la trajectoire des roues arrière du véhicule.

10. Dispositif selon la revendication 8 ou la revendication 9, **caractérisé en ce que** la cale arrière (3) est constituée par un bras horizontal (300) porté par un levier pivotant (301) articulé par son extrémité supérieure à la platine (2) et ce selon un axe horizontal perpendiculaire à la direction de déplacement de ladite platine (2).

11. Dispositif selon la revendication précédente, **caractérisé en ce que** l'ensemble moteur (5) est constitué par deux vérins hydrauliques double effet (500), (501), disposés horizontalement l'un au-dessus de l'autre de manière parallèle à la platine 2, que ces deux vérins (500), (501) présentent des longueurs de corps différentes et sont solidaires l'un de l'autre par une pièce rigide de liaison recevant en fixation l'extrémité de leur tige que l'un de ces vérins (500) le plus long est articulé par son corps au support (1), que l'autre vérin (501) est articulé par son corps à la platine (2) que la chambre avant du vérin (500) est connectée par une conduite hydraulique à la chambre arrière du vérin (501) tandis que la chambre avant de ce vérin (501) est connectée par une conduite hydraulique à la chambre arrière du vérin (500) et que la tige de l'un des vérins, en position antérieure de repos de la platine (2), est totalement déployée tandis que la tige de l'autre vérin, toujours en position antérieure de la platine (2), est totalement rétractée dans le corps de vérin.

12. Installation, **caractérisée en ce qu'**elle comporte un dispositif de calage selon l'une quelconque des revendications précédentes.

13. Procédé de calage à quai d'un véhicule de transport de marchandises mettant en oeuvre un dispositif de calage selon l'une quelconque des revendications 1 à 11.

## Patentansprüche

1. Vorrichtung zum Festkeilen eines Gütertransportfahrzeugs an einer Rampe, umfassend einen Horizontalträger (1), der dazu vorgesehen ist, gegenüber einer Laderampe im Boden verankert zu werden, eine Horizontalplatte (2), die verschiebbar auf dem Horizontalträger (1) angebracht ist, einen vorderen beweglichen Schubkeil (4), der von der Horizontalplatte (2) getragen wird, wobei die Platte (2) mittels einer Motorbaugruppe (5) derart betätigt wird, dass sie entlang des Trägers (1) zwischen einer vorderen Ruhestellung und einer hinteren Stellung gleitet, in welcher das Transportfahrzeugs an der Rampe festgekeilt ist, wobei die Motorbaugruppe weiterhin dazu geeignet ist, die Platte (2) sowohl in der vorderen Ruhestellung als auch in der Rampenfestkeilstellung festzulegen, wobei der vordere Schubkeil (4) eine Rückzugsstellung, in welcher er abseits der Fahrspur der Hinterräder des Fahrzeugs liegt, und eine Wirkstellung einnehmen kann, wobei er in letzterer einerseits einer der Umlaufflächen eines der Hinterräder des Fahrzeugs gegenüberliegt und andererseits gegen diese Umlauffläche gedrückt werden kann, indem die Platte (2) in Richtung ihrer Festkeilstellung geschoben wird, **dadurch gekennzeichnet, dass** sie einen Hinterkeil (3) umfasst, der dafür vorgesehen ist, einen Anschlag für das letzte Hinterfahrwerk des Fahrzeugs zu bilden, welches an der Rampe festgekeilt werden soll, und die Annährung des Fahrzeugs an die Rampe zu stoppen, damit ein Sicherheitsabstand zwischen der Rampe und dem rückwärtigen Teil des Fahrzeugs verbleibt, wobei der Hinterkeil (3) fest mit der Platte (2) verbunden ist und die Platte (2) einen festen Träger desselben darstellt, und wobei der Vorderkeil (4) von dem Hinterkeil (3) beabstandet ist.

2. Festkeilvorrichtung nach Anspruch 1, die dazu vorgesehen ist, Fahrzeuge an einer Rampe festzuhalten, welche mindestens ein Hinterfahrwerk aufweisen, **dadurch gekennzeichnet, dass** der Abstand zwischen dem Hinterkeil (3) und dem Vorderkeil (4) an den Durchmesser der Räder des letzten Hinterfahrwerks der Transportfahrzeuge angepasst ist und dass dieser Abstand derart ist, dass, wenn das letzte Hint erk gegen den oder jeden der Hinterkeile (3) drückt, der oder jeder der Vorderkeile (4) in der Ruhestellung einem freien Bereich gegenüberliegt, welcher sich unmittelbar vor der Lauffläche des Reifens mindestens eines der Räder des letzten Hinterfahrwerks befindet.

3. Festkeilvorrichtung nach Anspruch 1, die dazu vorgesehen ist, Fahrzeuge an einer Rampe festzuhalten, welche mindestens zwei Hinterfahrwerke aufweisen, **dadurch gekennzeichnet, dass** der Abstand zwischen dem Hinterkeil (3) und dem Vorderkeil (4) an den Durchmesser der Räder der Hinterfahrwerke der Transportfahrzeuge angepasst ist und dass dieser Abstand derart ist, dass, wenn das letzte Hinterfahrwerk gegen den oder jeden der Hinterkeile (3) drückt, der oder jeder der Vorderkeile (4) in der Ruhestellung hinter dem ersten Hinterfahrwerk und beabstandet vom letzten Hinterfarwerk angeordnet ist, sodass er ungehindert in seine Wirkstellung gebracht werden kann, um anschließend, wenn die Platte in die Festkeilstellung bewegt wird, unmittelbar gegen das direkt dahinter liegende Fahrwerk drücken kann, wobei dieses Fahrwerk das letzte Fahrwerk des Fahrzeugs oder das oder eines der dazwischenliegenden Fahrwerke darstellen kann.

4. Festkeilvorrichtung nach einem beliebigen der vorhergehenden Ansprüche, **dadurch gekennzeichnet, dass** jeder der Hinterkeile (3) und jeder der Vorderkeile (4) zumindest in der Wirkstellung seitlich zur Platte (2) geordnet sind.

5. Festkeilvorrichtung nach einem beliebigen der vorhergehenden Ansprüche, **dadurch gekennzeichnet, dass** der oder jeder der Vorderkeile (4) mittels eines Stellorgans von der Rückzugsstellung in die Wirkstellung und umgekehrt getrieben wird.

6. Festkeilvorrichtung nach einem beliebigen der Ansprüche 1 bis 5, **dadurch gekennzeichnet, dass** der oder jeder der Vorderkeile (4) rund um eine Horizontalachse an die Platte angelenkt ist, wobei die Achse parallel zur Verschiebungsrichtung der Platte (2) ist, und wobei der Vorderkeil (4) in der Rückzugsstellung vertikal und in der Wirkstellung horizontal und vom Boden beabstandet ist.

7. Festkeilvorrichtung nach dem vorhergehenden Anspruch, dadurch gekenntzeichnet, dass der Vorderkeil (4) aus einem zylindrischen Arm besteht, der mit einem seiner beiden Enden radial an einer Führungshülse (43) befestigt ist, welche eine axiale Durchbohrung aufweist, mittels derer sie drehbar in eine horizontale Welle (44) eingreift, deren beide Enden von Lagern gehalten werden, die von der Platte (2) getragen werden, und dass die Führungshülse (43) eine Kappe (45) aufweist, in der eine Achse gelagert ist, an welcher das Ende der Stange eines motorischen Stellorgans (6) angelenkt ist, der dazu dient, den Vorderkeil von seiner Wirkstellung in seine Rückzugsstellung zu bringen und umgekehrt.

8. Festkeilvorrichtung nach einem beliebigen der Ansprüche 1 bis 5, **dadurch gekennzeichnet, dass** der oder jeder der Vorderkeile (4) aus einem horizontalen Arm besteht, der sich rechtwinklig zur Verschiebungsrichtung der Platte (2) erstreckt, wobei der Arm gleitend in einer röhrenförmigen Führung (46) angebracht sind, welche an der Platte (2) befestigt ist.

9. Festkeilvorrichtung nach dem vorhergehend Anspruch, **dadurch gekennzeichnet, dass** der Keil (4) mittels eines Stellorgans (6) zwischen seiner Rückzugsstellung und seiner Wirkstellung bewegt wird, welches aus einem Stellzylinder besteht, dessen Stange in der Rückzugsstellung an dem entsprechenden Ende des Arms und dessen Zylinderkörper an der Platte (2) befestigt sind, wobei der Vorderkeil (4) gegenüber der Fahrspur der Hinterräder des Fahrzeugs seitlich versetzt ist.

10. Vorrichtung nach Anspruch 8 oder Anspruch 9, **dadurch gekennzeichnet, dass** der Hinterkeil (3) aus einem horizontal Arm (300) besteht, der von einem Schwenkhebel (301) getragen wird, dessen oberes Ende an der Platte (2) angelenkt ist, und zwar gemäß einer horizontalen Achse, die rechtwinklig zur Verschiebungsrichtung der Platte (2) ist.

11. Vorrichtung nach dem vorhergehenden Anspruch, **dadurch gekennzeichnet, dass** die Motorbaugruppe (5) aus zwei doppeltwirkenden Hydraulikstellzylindern (500, 501) besteht, die horizontal übereinander parallel zur Platte 2 angeordnet sind, dass diese beiden Stellzylinder (500, 501) unterschiedliche Zylinderkörperlängen aufweisen und mittels eines steifen Verbindungsstücks fest miteinander verbunden sind, an welchem ihre jeweilige Stange befestigt ist, dass einer dieser Stellzylinder (500), nämlich der längere, mit seinem Zylinderkörper an dem Träger (1) angelenkt ist, dass der andere Stellzylinder (500) mit seinem Zylinderkörper an der Platte (2) angelenkt ist, dass die Vorderkammer des Stellzylinders (500) über eine Hydraulikleitung mit der Hinterkammer des Stellzylinders (501) verbunden ist, während die Vorderkammer dieses Stellzylinders (501) über eine Hydraulikleitung mit der Hinterkammer des Stellzylinders (500) verbunden ist, und dass die Stange eines der Stellzylinder in der vorderen Ruhestellung der Platte (2) vollständig ausgefahren ist, während die Stange des anderen Stellzylinders, ebenfalls in der vorderen Ruhestellung der Platine (2), vollständig in den Stellzylinderkörper zurückgezogen ist.

12. Anlage, **dadurch gekennzeichnet, dass** sie eine Festkeilvorrichtung nach einem beliebigen der vorhergehenden Ansprüche aufweist.

13. Verfahren zum Festkeilen eines Gütertransportfahrzeugs an einer Rampe, wobei eine Festkeilvorrichtung nach einem beliebigen der Ansprüche 1 bis 11 zum Einsatz kommt.

## Claims

1. Device for chocking a goods transportation vehicle at a dock, comprising a horizontal base (1) designed to be anchored on the ground in front of a loading dock, a horizontal plate (2) mounted slidingly on the horizontal base (1), a front movable thrust-action chock (4), carried by the horizontal plate (2), said plate (2) being actuated slidingly along the base (1), between an anterior rest position and a posterior position of chocking the transportation vehicle at the dock, by a motor assembly (5), which is also able to immobilize the prate (2) both in the anterior rest position and in the position of chocking at the dock and of maintaining it in these positions, the front thrust-action chock (4) being able to occupy a release position, in which it is spaced apart from the trajectory of the rear wheels of the vehicle, and an active position, in which, firstly, it is positioned facing one of the surfaces of revolution of one of the rear wheels of the vehicle and, secondly, by moving the plate (2) toward its cocking positions, it can act in thrust anner on this surface of revolution, **characterized in that** it comprises a rear chock (3), designed to constitute a stop for the last rear wheel train of the vehicle to be chocked at the dock, a to stop the advance of the vehicle toward the dock so as to preserve a safety distance between the dock and the rear of the vehicle, said rear chock (3) integral with the said plate (2) and carried fixedly by said prate (2), and said front choc (4) being at a distance from the rear chock (3).

2. Chocking device according to claim 1, designed to secure vehicles possessing at least on rear wheel train at a dock, **characterized in that** the distance between the the rear chock (3) and the front chock (4) is adapted to the diameters of the wheels of the last rear train of transportation vehicles and **in that** this distance is such that, when the last rear wheel train is braced ainst the or each of the rear chock(s) (3), the or each of the front chock(s) (4), in the rest position, is asition facing an unoccupied zone situated immediately in front of the tread surface of the tire of at least one of the wheels of the last rear train.

3. Chocking device according to claim 1, designed to secure vehicles possessing at least two rear wheel trains at a deck, **characterized in that** the distance between the rear chock (3) and the front choc (4) is adapted to the diameters of the wheels of the rear trains of transportation vehicles, and **in that** this distance is such that, when the last rear wheel train is braced against the or each of the rear chock(s) (3), the or each of the front chock(s) (4), in the rest position, is positioned behind the first rear wheel train and spaced apart from the last rear wheel train such that it can be freely actuated toward its active position and then, during the movement of the plate toward the chocking position, can act directly in thrust manner on the wheel train immediately behind, which wheel train may be the last wheel train of the vehicle or the or one of the intermediate trains.

4. Chocking device according to any one of the preceding claims, **characterized in that** each rear chock (3) and each front chock (4) is positioned laterally relative to the plate (2), at least when they are in the active position.

5. Chocking device according to any one of the preceding claims, **characterized in that** the or each of the front chock(s) (4) is driven between the release position an the active position and vice versa by a motor unit.

6. Chocking device according to any one of claims 1 to 5, **characterized in that** the or each of the front chock(s) (4) is mounted in articulated manner on the plate around a horizontal axis parallel to the direction of movement of said plate (2), the front chock (4) being vertical when in the release position and being horizontal and spaced apart from the ground when in the active position.

7. Chocking device according to the preceding claim, **characterized in that** the front chock (4) is constituted by a cylindrical arm, which is fixed radially at on of its two ends to a bush (43) having an axial through hole, via which it is engaged in rotation on a horizontal shaft (44) held at its two ends on bearings supported by the plate (2), and **in that** the bush (43) has a crosspiece (45) supporting a spindle that receives, in articulation, the end of the rod of a motor unit (6) for actuating the front chock between its active position and its release position and vice versa.

8. Chocking device according to any one of claims 1 to 5, **characterized in that** the or each of the front chock(s) (4) is constituted by a horizontal arm expending perpendicular to the direction of movement of the plate (2), said arm being mounted slidingly in a tubular guide (46) fixed to the plate (2).

9. Chocking device according to the preceding claim, **characterized in that** the chock (4) is actuated between its release position and its active position by a motor unit (6) constituted by an actuator fixe by its rod to the corresponding end of the arm (4) and by its body to the plate (2), the front chock (4) being offset laterally relative to the trajectory of the rear wheels of the vehicle when it is in the release position.

10. Device according to claim 8 or claim 9, **characterized in that** the rear chock (3) is constituted by a horizontal arm (300) carried by a pivoting lever (301) articulated by its upper end to the plate (2), around a horizontal axis perpendicular to the direction of movement of said plate (2).

11. Device according to the preceding claim, **characterized in that** the motor assembly (5) is constituted by two double-acting hydraulic actuators (500), (501), positioned horizontally one above the other parallel to the plate 2, **in that** these two actuators (500), (501) have different body lengths and are connected to each other via a rigid connecting member receiving fasteningly the end of their rod, **in that** one of these actuators (500), the longer of the two, is articulated via its body to the base (1), **in that** the other actuator (501) is articulated via its body to the plate (2), **in that** the front chamber of actuator (500) is connected by a hydraulic conduit to the rear chamber of actuator (501), while the front chamber of this actuator (501) is connected by a hydraulic conduit to the rear chamber of actuator (500), and **in that** the rod of one of the actuators, in the anterior rest position of the plate (2), is totally deplored, while the rod of the other actuator, still in the anterior position of the plate (2), is totally retracted into the body of the actuator.

12. Installation, **characterized in that** it comprises a chocking device according to any one of the preceding claims.

13. Method for chocking a goods transportation vehicle at a dock utilizing a chocking device according to any one of claims 1 to 11.
